# FASCICULE DE BREVET EUROPEEN

(11) **EP 0 442 782 B1**
(45) Date de publication et mention de la délivrance du brevet: **14.06.1995**
(21) Numéro de dépôt: 91400292.8
(22) Date de dépôt: 07.02.1991
(51) Int. Cl.: B41F 17/30, A01K 43/10, B41M 1/40

(54) **Machine à imprimer un oeuf**
Eidruckvorrichtung
Egg printing device

(30) Priorité: 16.02.1990 FR 9001887
(43) Date de publication de la demande: 21.08.1991
(73) Titulaire: OEUROMER S.A., 2121 Luxembourg-Kirchberg (LU)
(72) Inventeur: Roulleau, Pierre, F-01100 Oyonnax (FR)
(74) Mandataire: Bourgognon, Jean-Marie

(56) Documents cités:
- EP-A- 0 069 038
- AU-B- 34 372
- DE-A- 3 516 016
- FR-A- 788 432
- FR-A- 2 531 664
- GB-A- 1 134 630

## Description

La présente invention se rapporte aux oeufs non cuits de volaille, notamment de poule, sur les coquilles desquels sont apposés des motifs décoratifs de grande dimension, et concerne les machines à imprimer permettant d'apposer des motifs de ce genre sur des oeufs.

On sait apposer des motifs décoratifs sur un oeuf par flexographie, par l'emploi de clichés gravés concaves en caoutchouc (DE-A-35 16 016). Mais ces procédés ne conviennent pas pour appliquer nettement une publicité ou un motif décoratif de grande dimension et en plusieurs couleurs sur la coquille non développable de l'oeuf, d'autant que les courbures diffèrent d'un oeuf à l'autre, même de même dimension. Les parties en relief du cliché ne s'adaptent pas correctement à la surface non développable de l'oeuf. Au brevet des Etats-Unis d'Amérique no 4 843 958, on propose un procédé sans contact au jet d'encre. Ce procédé a l'avantage d'écarter le danger de casser les oeufs, lors de l'impression, mais il présente le grave inconvénient que les motifs obtenus ne sont pas continus, parce qu'ils sont formés d'une succession de taches ponctuelles qui, lorsqu'on imprime sur une surface courbe de l'oeuf et notamment sur les bouts, ne sont même pas de même dimension et de même forme, puisque la coquille n'est pas plane.

L'invention pallie ces inconvénients par un procédé qui permet d'apposer des motifs décoratifs de qualité et de grande dimension même sur les parties de la coquille les plus incurvées. Le procédé permet d'obtenir un oeuf de volaille non cuit, sur la coquille duquel est apposé un motif décoratif dont deux dimensions perpendiculaires entre elles ont chacune une longueur d'arc d'ellipse d'au moins 2 cm, mais qui comporte des parties continues telles qu'imprimées par tampographie. La tampographie consiste à appliquer sur l'objet à décorer un tampon souple, de préférence légèrement convexe, qui a reçu précédemment le motif à imprimer. Le motif se trouve gravé en creux dans une plaque généralement en acier. Cette plaque, appelée cliché, est d'abord recouverte uniformément d'encre, puis nettoyée par le passage d'une racle, semblable à une lame de rasoir, qui laisse subsister seulement l'encre dans le creux de la gravure. Le tampon est d'abord appliqué sur le cliché où il prend l'encre correspondant au motif, puis sur l'objet où il la dépose. Le procédé est utilisable sans altération de la qualité de l'impression, même si le tampon a des dimensions importantes et une consistance très molle. Dans ces conditions, il peut se déformer sans difficulté pour épouser la surface de l'oeuf sur une grande étendue sans avoir besoin d'appliquer une pression excessive. Le motif peut s'étendre notamment sur les bouts très incurvés de l'oeuf et, en particulier, sur le petit bout très difficile à rendre accessible sur un support habituel où l'oeuf est posé en ayant l'axe vertical, et, si on le souhaite, simultanément sur la face latérale de l'oeuf. Le motif a une ou, de préférence, plusieurs couleurs. Un même tampon peut servir à imprimer des oeufs de forme différente.

La machine suivant l'invention est définie à la revendication 1.

Des modes de réalisation sont indiquées aux sous-revendications.

Grâce à un support particulier à 4 facettes qui définissent une position stable de l'oeuf quelles qu'en soient la forme et la dimension, on peut appliquer les tampons d'impression par tampographie sur l'oeuf, reposant sur ce support en ayant son axe horizontal, sur la face latérale tournée vers le haut et/ou sur l'un ou les deux bouts, sans le déplacer, de sorte que l'on peut appliquer successivement deux tampons pour obtenir deux couleurs différentes au même endroit de l'oeuf, par exemple en faisant passer l'oeuf toujours maintenu sur son support devant deux postes d'impressions différentes, et sans le casser sous les forces d'application des tampons, car les facettes sont agencées de telle façon qu'elles ne provoquent pas de poinçonnages. On peut mettre sur le même support successivement plusieurs oeufs de formes et dimensions différentes sans les casser et tout en les maintenant exactement en position, ce qui est un avantage déterminant pour l'application industrielle de cette machine.

A la différence de la machine compliquée décrite au FR-A788 432 qui comprend un support de l'oeuf et un mécanisme destiné à mettre un tampon au contact de l'oeuf sur le support et dans laquelle des cuillères recouvrent partiellement les zones à imprimer, toute la face latérale supérieure de l'oeuf posé sur le support est dégagée, ce qui laisse place à un second tampon d'impression par tampographie associé à un second mécanisme destiné à le mettre au contact de l'oeuf sur le support, ce second tampon étant déplacé par le second mécanisme dans la direction verticale, de manière à pouvoir imprimer, à la fois le bout d'oeuf et la face latérale de l'oeuf sur une très grande dimension. On peut même imprimer à la fois la surface latérale et les deux bouts.

Avantageusement les facettes sont planes.

Suivant un mode de réalisation avantageux, le support ne s'étend au-dessous de l'oeuf, et à l'exception des facettes, pratiquement qu'en-dehors du contour de l'oeuf. Si un oeuf déjà fêlé se casse lors de l'impression, la partie liquide s'écoule en-dessous de la machine d'impression, il n'est pas nécessaire de l'arrêter pour la nettoyer avant de reprendre les opérations.

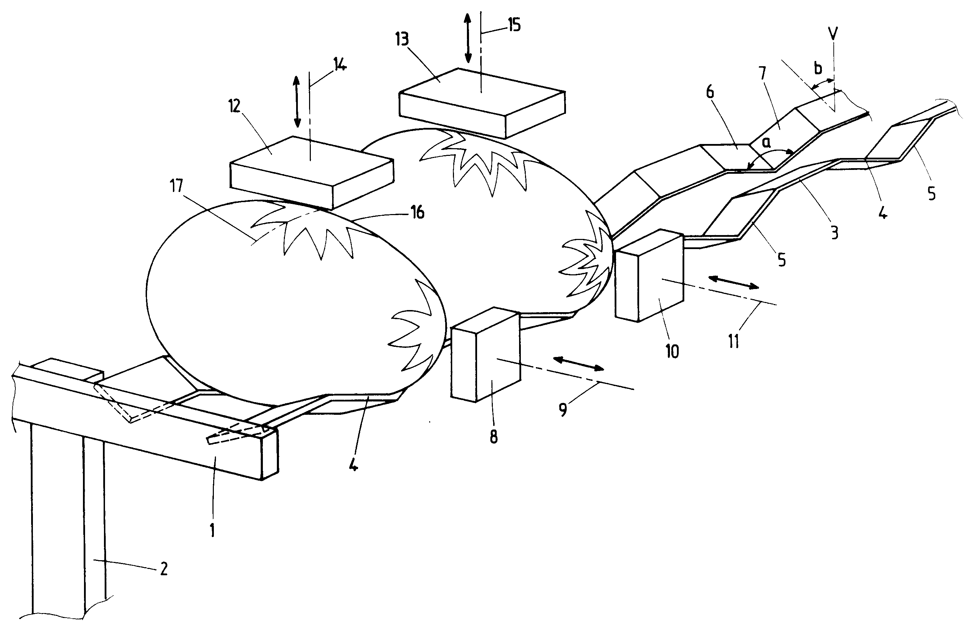

Au dessin annexé, donné uniquement à titre d'exemple, la figure 1 est une vue en perspective illustrant l'invention.

Entre deux traverses 1, portées par deux montants 2, s'étendent deux longerons 3 ondulés formant le support d'une rangée d'oeufs à imprimer, disposés sur le support en ayant leur axe de révolution horizontal. Chaque alvéole du support comporte deux couples de facettes 4, 5 et 6, 7. Chaque facette est inclinée d'un angle (b) compris entre 20° et 70° par rapport à la verticale (v) en s'éloignant de celle-ci de bas en haut. Les facettes (4,5,6,7) de chaque couple font entre elles un angle (a) de 90° (généralement compris entre 60° et 120°). La distance entre deux facettes 4, 6 de deux couples différents est inférieure à la taille de l'oeuf et est comprise entre 25 et 50 mm. Un premier tampon 8 d'impression par tampographie est déplacé par un premier mécanisme, comprenant un vérin 9, dans une direction horizontale sensiblement suivant le plan bissecteur du dièdre formé par les facettes 6 et 7 qui est confondu avec celui du dièdre formé par les facettes 4 et 5. A un autre poste se trouve un autre premier tampon 10 déplacé par un vérin 11 et encré d'une couleur différente de celle du tampon 8.

De même, des seconds tampons 12 et 13 d'impression par tampographie déplacés par des vérins 14 et 15, dans la direction verticale, permettent d'imprimer la face latérale supérieure de l'oeuf.

L'oeuf obtenu comporte un motif imprimé par tampographie en plusieurs couleurs s'étendant sur deux arcs (16,17) d'ellipse perpendiculaires entre eux, chacun de plus de 2 cm de longueur.

## Revendications

1. Machine à imprimer des oeufs, comprenant un support de l'oeuf à imprimer et un premier mécanisme (9) destiné à mettre un premier tampon (8) au contact de l'oeuf sur le support et à l'en éloigner, le premier tampon (8) étant un tampon d'impression par tampographie, le support étant formé de deux longerons (3) parallèles ménageant chacun des séries de couples (4,5,6,7) de facettes délimitant une série d'alvéoles, chaque alvéole étant délimitée par deux couples de facettes (4,5,6,7), chaque facette étant inclinée d'un angle (b) par rapport à la verticale (v), les facettes (4,5,6,7) de chaque couple faisant entre elles un angle (a) compris entre 60° et 120°, la distance dans un plan horizontal entre les deux facettes (4,6) les plus proches l'une de l'autre de deux couples différents en vis-à-vis étant inférieure à la taille d'un oeuf, et le premier tampon (8) étant déplacé par le premier mécanisme (9) dans une direction horizontale suivant le plan bissecteur du dièdre formé par l'un des couples de facettes (4,5,6,7).

2. Machine à imprimer suivant la revendication 1, caractérisée en ce que les plans de deux facettes (4,5) d'un même couple font avec la verticale un angle (b) de 20° à 70°.

3. Machine à imprimer suivant l'une des revendications 1 ou 2, caractérisée en ce que ladite distance entre deux facettes de deux couples différents est comprise entre 25 et 50 mm.

4. Machine à imprimer suivant la revendication 1, 2 ou 3, caractérisée par un second tampon (12) d'impression par tampographie associé à un second mécanisme (14) destiné à le mettre au contact de l'oeuf sur le support, le second tampon (12) étant déplacé par le second mécanisme (14) dans la direction verticale.

5. Machine à imprimer suivant l'une des revendications 1 à 4, caractérisée en ce que les facettes (4,5,6,7) sont planes.

6. Machine à imprimer suivant l'une des revendications 1 à 5,
caractérisée en ce que le support ne s'étend endessous de l'oeuf, à l'exception des facettes (4,5,6,7), pratiquement qu'en-dehors du contour de l'oeuf.

## Claims

1. Machine for printing eggs comprising a support for the egg to be printed and a first mechanism (9) for placing a first inking pad (8) in contact with the egg on the support and for moving it away, this first inking pad being a tampographic inking pad, wherein the support is formed of two parallel side members (3), each of these side members (3) being provided with rows of pairs of facets (4,5,6,7), these facets delimiting a row of dimples, each dimple being delimited by two pairs of facets (4,5,6,7), each facet being inclined in relation to the vertical (v) by an angle (b), the facets (4,5,6,7) of each pair forming between them an angle (a) of between 60° and 120°, the distance in an horizontal plane between the two facets (4,6) the closest the one to the other of two different pairs that face each other being less than the size of an egg, and the first inking pad (8) being displaced by the first mechanism (9) in an horizontal direction, along the plane bisecting the dihedral formed by one of the pairs of facets (4,5,6,7).

2. Printing machine according to claim 1, characterized in that the planes of two facets (4,5) of a same pair are inclined to the vertical by an angle (b) comprised between 20° and 70°.

3. Printing machine according to claim 1 or 2, characterized in that the said distance between two facets of two different pairs is comprised between 25 and 50 mm.

4. Printing machine according to any of the claims 1 to 3, characterized by a second inking pad (12) for printing by tampography, this second inking pad being associated with a second mechanism (14) for placing it in contact with the egg on the support, the second inking pad (12) being displaced by the second mechanism (14) in the vertical direction.

5. Printing machine according to any of the claims 1 to 4, wherein the facets (4,5,6,7) are plane.

6. Printing machine according to any of the claims 1 to 5, characterized in that the support extends below the egg practically only outside the contour of the egg, with the exception of the facets.

## Patentansprüche

1. Maschine zum Bedrucken von Eiern, enthaltend eine Halterung für die zu bedruckenden Eier und einen ersten Mechanismus (9), der dazu bestimmt ist, einen ersten Stempel (8) in Berührung mit dem auf der Halterung befindlichen Ei zu bringen und davon zu entfernen, wobei der erste Stempel (8) ein Druckstempel für den Stempeldruck ist, wobei die Halterung aus zwei parallel zueinander verlaufenden Längsträgern (3) gebildet wird, die jeweils Serien von Facettenpaaren (4, 5, 6, 7) aufweisen, die eine Serie von Nestern begrenzen, wobei jedes Nest von zwei Facettenpaaren (4, 5, 6, 7) begrenzt wird, wobei jede Facette um einen Winkel (b) gegenüber der Vertikalen (v) geneigt ist, wobei die Facetten (4, 5, 6, 7) eines jeden Paares zwischen sich einen Winkel (a) zwischen 60 und 120° einschließen, wobei die Entfernung in horizontaler Richtung zwischen den einander am nächsten liegenden beiden Facetten (4, 6) von zwei verschiedenen, einander gegenüberliegenden Paaren kleiner ist als die Größe eines Eies, und wobei der erste Stempel (8) von dem ersten Mechanismus (9) in eine Richtung versetzt wird, die horizontal in der Ebene der Winkelhalbierenden der von einem der Facettenpaare (4, 5, 6, 7) gebildeten V-Stellung verläuft.

2. Druckmaschine nach Anspruch 1, dadurch gekennzeichnet, daß die Ebenen der Facetten (4, 5) des gleichen Paares mit der Vertikalen eines Winkels (b) zwischen 20 und 70° zusammenfallen.

3. Druckmaschine nach den Ansprüchen 1 oder 2, dadurch gekennzeichnet, daß die genannte Entfernung zwischen zwei Facetten von zwei unterschiedlichen Paaren zwischen 25 und 50 mm beträgt.

4. Druckmaschine nach einem der vorhergehenden Ansprüche, dadurch gekennzeichnet, daß ein zweiter Druckstempel (12) für den Stempeldruck mit einem zweiten Mechanismus (14) verbunden ist, der dazu dient, diesen mit dem auf der Halterung befindlichen Ei in Kontakt zu bringen, wobei der Zweite Stempel (12) von dem zweiten Mechanismus (14) in vertikaler Richtung versetzt wird.

5. Druckmaschine nach einem der vorhergehenden Ansprüche, dadurch gekennzeichnet, daß die Facetten (4, 5, 6, 7) eben sind.

6. Druckmaschine nach einem der vorhergehenden Ansprüche, dadurch gekennzeichnet, daß sich die Halterung unterhalb des Eies mit Ausnahme der Facetten (4, 5, 6, 7) praktisch lediglich außerhalb der Umrißlinie des Eies erstreckt.
